# EUROPEAN PATENT APPLICATION

(11) **EP 1 741 742 A1**
(43) Date of publication of application: **10.01.2007**
(21) Application number: 05425476.8
(22) Date of filing: 05.07.2005
(51) Int. Cl.: C08J 5/04

(54) **Fibrous support for composite material**

(71) Applicant: Stabilimenti Tessili Ozella S.p.A., 10077 San Maurizio Canavese TO (IT)
(72) Inventor: Gaio, Andrea, I-10090 Rosta ( Torino ) (IT); Mezzo, Luca, I-10076 Nole ( Torino ) (IT)
(74) Representative: Gerbino, Angelo

(57) **Abstract**

The fibrous support is capable of being impregnated with a thermosetting resin and comprises a plurality of assembled thread-like elements and at least one element comprising thermoplastic phenoxy polymer having the formula 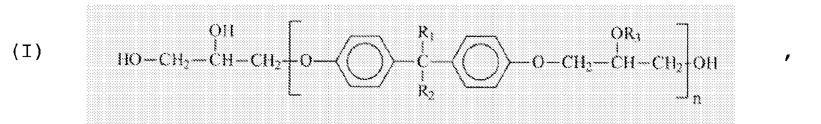 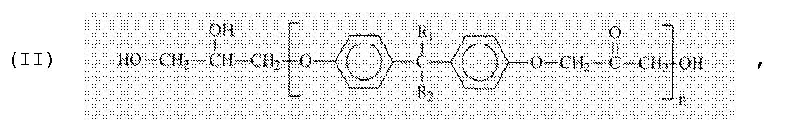 or 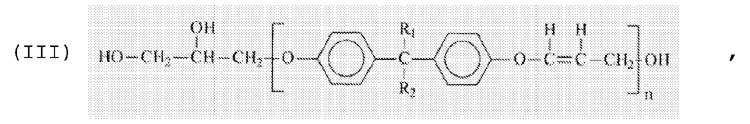 in which
R₁ and R₂ are mutually independently selected from among H, C₁-C₁₀ alkyl and optionally substituted phenyl,
R₃ is selected from among H, C₁-C₁₀ alkyl, C₁-C₁₀ carboxyethyl and COR₄ where R₄ denotes H or a C₁-C₉ alkyl, and
n is an integer of between 3,000 and 20,000,
said phenoxy polymer having a glass transition temperature (Tg) of no less than 20°C.

## Description

The present invention relates to the sector of composite materials composed of fibrous supports and thermosetting resins.

Typically, such a support, which is formed from thread-like elements assembled for example from interwoven fibres, is impregnated with thermosetting resin and then heated for the period of time necessary to bring about curing of the resin and so obtain the desired composite material.

One important requirement in the production processes for said composite materials is that the dimensional stability of the fibrous support is maintained during the various processing phases (for example cutting, die cutting, positioning in the mould, etc.), so preventing the constituent fibres from becoming too close together or too spaced apart.

In order to achieve this result, it has been proposed to increase the quantity of fibre per unit area, but this has the disadvantage of complicating the subsequent impregnation with the thermosetting resin.

In order to ensure dimensional stability without compromising the subsequent impregnation phase, it has accordingly been proposed to coat the fibrous support with thermoplastic polymers, such as polyamides, polyesters and the copolymers thereof, which, after having been softened by heating, hold the fibres of the support together.

However, these thermoplastic resins have physico-chemical properties which are significantly different from those of the thermosetting resins, for example epoxy resins, which are typically used for impregnation. These differences mean that tensions are generated in the interface which forms between the thermoplastic polymer and thermosetting resin, which are essentially due to the different coefficients of thermal expansion, which result in the formation of cracks which then initiate failure of the composite material by delamination or detachment of the thermosetting resin from the fibrous support.

With the aim of avoiding the above-mentioned disadvantages of the prior art, it is thus an object of the present invention to provide a fibrous support capable of being impregnated with a thermosetting resin, said fibrous support comprising a plurality of assembled thread-like elements and at least one element comprising a thermoplastic phenoxy polymer having the formula 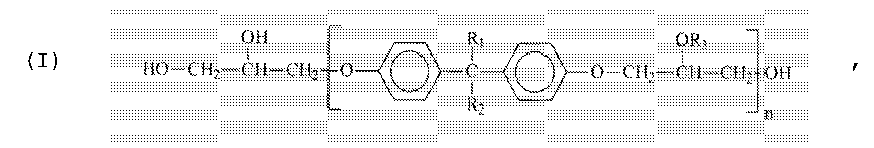 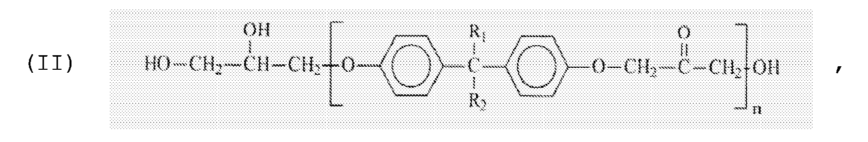 or 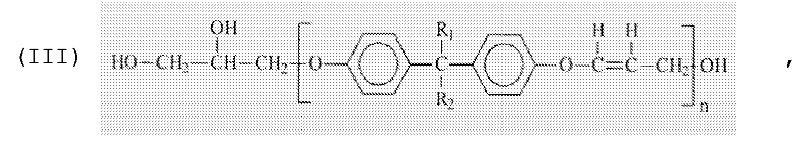 in which
R₁ and R₂ are mutually independently selected from among H, C₁-C₁₀ alkyl and optionally substituted phenyl,
R₃ is selected from among H, C₁-C₁₀ alkyl, C₁-C₁₀ carboxyethyl and COR₄ where R₄ denotes H or a C₁-C₉ alkyl, and
n is an integer of between 3,000 and 20,000,
said phenoxy polymer having a glass transition temperature (Tg) of no less than 20°C.

The above-stated phenoxy polymer preferably has the formula 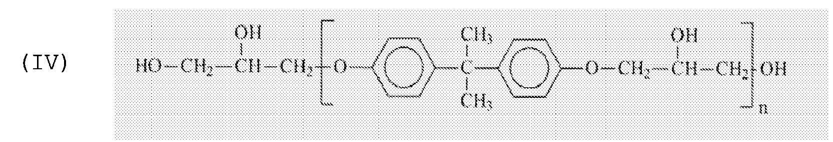 in which n is an integer of between 3,000 and 20,000 and preferably between 8,000 and 16,000.

The phenoxy polymer used in the fibrous support according to the invention is insoluble in the thermosetting resins typically used for the production of composite materials, and is also chemically inert towards them, such that it provides an effective dimensional stabilisation action of the fibrous support both during and after the impregnation thereof with the thermosetting resin. It is furthermore capable of imparting advantageous thermoformability properties to the fibrous support.

The element or elements comprising a phenoxy polymer may be produced in substantially any physical form, for example in the form of multifilament yarn, monofilament yarn, split yarn, long and short staple yarn, such as wool and cotton yarn, fibre, powder, spot resin bonded material, film, felt, coating, nonwoven fabric and any desired combination thereof. Such elements may be composed entirely of phenoxy polymer or comprise further components other than this, for example plasticisers such as epoxy resins. The phenoxy polymer may also be used as a coating for fibres or yarns of a different chemical nature.

Overall, the fibrous support according to the invention may, for example, be produced in the form of nonwoven fabric, orthogonal fabric, unidirectional fabric, multiaxial fabric, three-dimensional fabric, tape fabric, braided fabric, cord fabric, warp and weft knitted fabric and any desired combination thereof. In particular, said support may comprise a plurality of layers of identical or different types joined to one another, for example by means of stitching, coupling, resin bonding and the like.

The fibrous support may solely comprise phenoxy polymer fibres or yarns or also further thread-like elements, for example fibres selected from the group consisting of carbon, glass, basalt, aramid, polyester, ceramic, or metallic fibres and mixtures thereof.

The present invention also provides a composite material comprising a fibrous support of the above-described type and a thermosetting resin having a glass transition temperature (Tg) of no less than 30°C.

Said thermosetting resin is, for example, selected from the group consisting of epoxy, vinyl ester, polyester, phenolic and phenoxy resins and mixtures thereof.

Epoxy resin is preferred thanks to the similarity between its molecular structure and that of phenoxy resin, from which it differs only by the presence of epoxy groups, instead of hydroxyl groups, as molecular chain ends. This structural similarity results in a similarity of the respective coefficients of thermal expansion (55*10⁻⁶ mm/°C for the phenoxy polymer and 55-70*10⁻⁶ mm/°C for the epoxy matrix). The combination of phenoxy polymer elements with an epoxy resin is thus particularly suitable for the production of composite materials subjected to fatigue stress.

In the composite material of the invention, the percentage by weight of phenoxy polymer is for example between 0.5 and 99.5% of the total weight and more preferably between 1 and 20%.

One specific example of a composite material of the invention is composed of a unidirectional fabric with a phenoxy polymer weft and a carbon fibre warp, the fabric being impregnated with a thermosetting epoxy system.

Further advantages and features of the present invention will become clear from the following examples of embodiment which are provided by way of non-limiting example.

### EXAMPLE 1

Using a INCHEM PKHH phenoxy polymer having a number average molecular weight of 13000 dalton, a weight average molecular weight of 52000 dalton, a viscosity at 25°C of 525-715 cP, a Tg of 92°C, a density of 1.18 g/cm³ and a melt index at 200°C of 4, a yarn with the following properties was obtained:
Linear density: 520 dtex
Tenacity: approx. 8 cN/tex
Modulus: 206 cN/tex
Elongation at break: approx. 29%.

Said yarn was subjected to compatibility testing with an epoxy system and the individual components thereof, which are typically used for the production of thermosetting matrices for composite materials.

Said yarn was subjected at atmospheric pressure to a thermal cycle comprising firstly heating at 2°C/min up to 120°C followed by a plateau at 120°C for 50 minutes, under the following conditions:
a) in air;
b) immersed in pure epoxy resin;
c) immersed in pure dicyandiamide curing agent;
d) immersed in epoxy resin and curing agent mixed together so as to form a thermosetting system;
giving rise to the following results:
a) no dimensional variation, even if the Tg is exceeded;
b) no diffusion of phenoxy resin into the epoxy resin, nor any colour changes due to any possible reactions;
c) no diffusion of phenoxy resin into the dicyandiamide;
d) no diffusion of phenoxy resin into the thermosetting epoxy system; the yarn did, however, have the appearance of a more compact agglomerate than in case a), where the individual filaments are, in contrast, still visible.

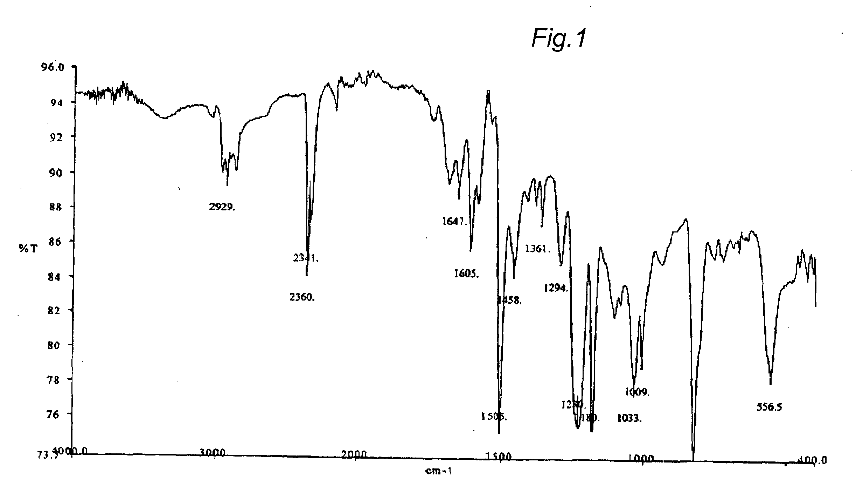

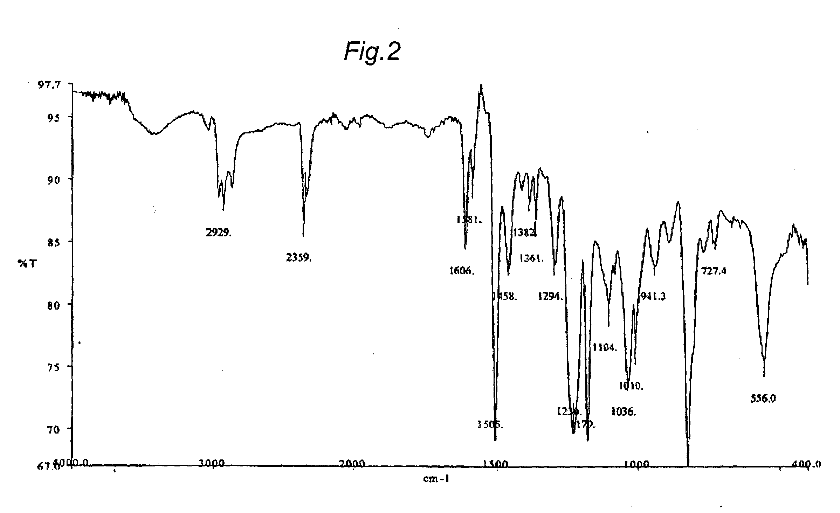

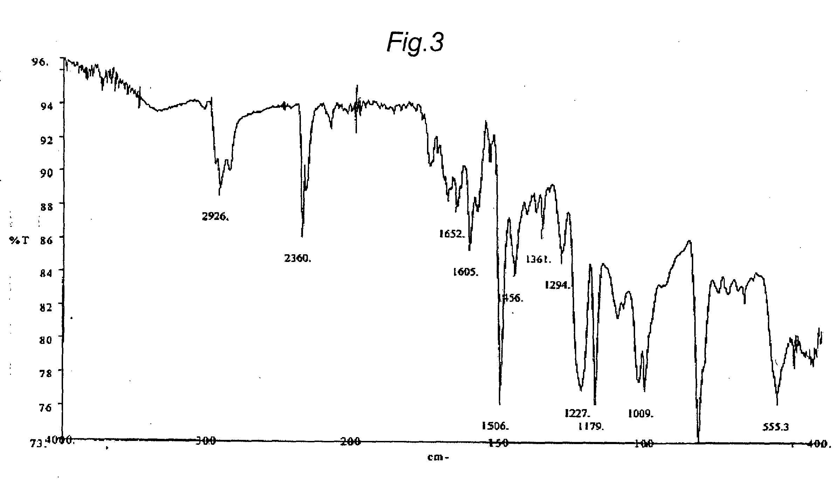

By way of confirmation of the results of the above-stated tests, FT-IR spectra were obtained for the epoxy resin (Figure 1), the phenoxy resin (Figure 2) and the interfacial zone between the two polymers (Figure 3). The spectrum of the interfacial zone does not differ from those for the pure polymers, so confirming their non-miscibility under the test conditions.

### EXAMPLE 2

Tests similar to those of Example 1, conditions a) and d), were carried out with the only difference that a pressure of 0.32 MPa was used instead of atmospheric pressure.

In case a), the yarn was highly deformed and its individual constituent filaments could no longer be recognised. In case d), the yarn could no longer be distinguished from the epoxy matrix, apart from the presence of a more opaque zone corresponding to its original position, due to diffusion of the phenoxy polymer into the epoxy resin, where, however, it did not dissolve.

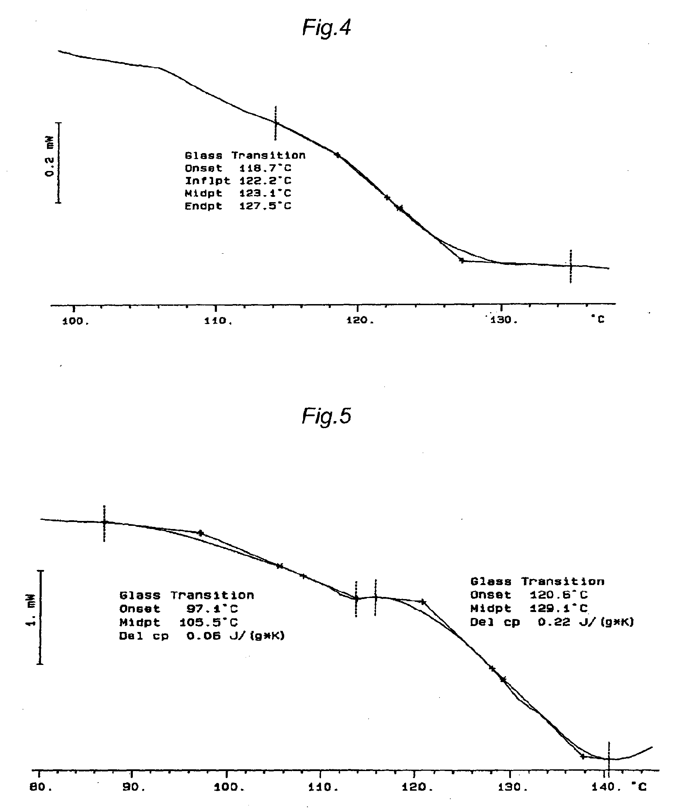

DSC testing was then performed both in the less opaque or translucent zone (see thermogram shown in Fig. 4) and in the more opaque zone (see thermogram shown in Fig. 5). As is immediately evident, this latter thermogram has two very distinct inflections due to the glass transitions of the individual components, so demonstrating the absence of chemical reactions and solubility between the two components even under pressure.

The tests described in Examples 1 and 2 thus clearly indicate that the phenoxy polymer exhibits good thermoplastic behaviour, readily melting at temperatures of the order of 120°C, but without dissolving at the interface with the epoxy matrix nor reacting therewith.

### EXAMPLE 3

A fibrous support composed of a unidirectional fabric with a carbon fibre warp and a PKHH phenoxy polymer weft was first hot calendered to ensure diffusion of the phenoxy polymer of the weft, allowing the warp fibres to spread out and remain dimensionally stabilised. The fabric was then impregnated with a thermosetting epoxy system in an amount of 43% relative to the total weight of the composite material and was then placed in a flat mould at ambient temperature. The mould was closed and heated up to 120°C at a heating rate of 2°C/min, was then held at 120°C for 1 hour to permit complete crosslinking of the thermosetting system, and was finally cooled. In this manner, a composite material was obtained in the form of a flat sheet usable in various structural applications, for example as reinforcement for beams in the building sector.

Naturally, the principle of the invention remaining the same, the details of performance and forms of embodiment may be varied widely with respect to those described purely by way of example, without thereby departing from the claimed scope.

## Claims

1. A fibrous support capable of being impregnated with a thermosetting resin, said fibrous support comprising a plurality of assembled thread-like elements and at least one element comprising thermoplastic phenoxy polymer having the formula 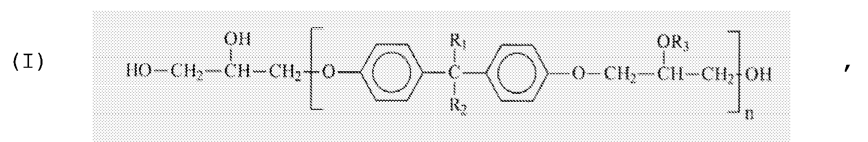 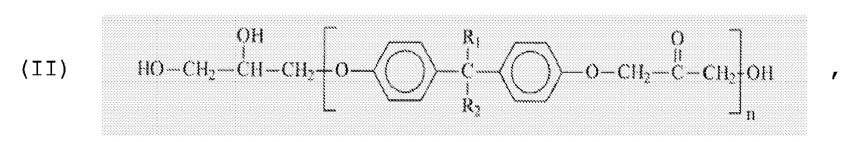 or 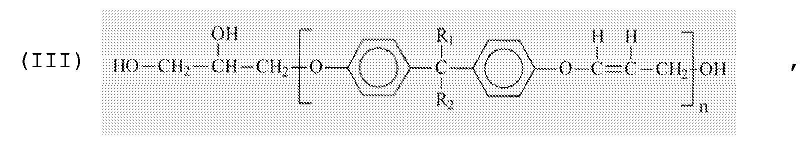 in which
R₁ and R₂ are mutually independently selected from among H, C₁-C₁₀ alkyl and optionally substituted phenyl,
R₃ is selected from among H, C₁-C₁₀ alkyl, C₁-C₁₀ carboxyethyl and COR₄ where R₄ denotes H or a C₁-C₉ alkyl, and
n is an integer of between 3,000 and 20,000,
said phenoxy polymer having a glass transition temperature (Tg) of no less than 20°C.

2. A support according to claim 1, in which said phenoxy polymer has formula 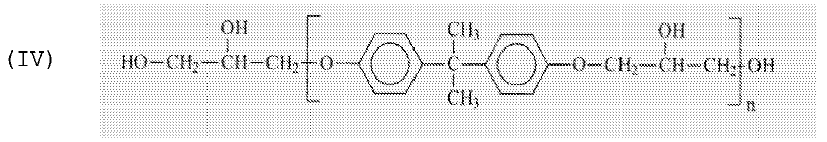 in which n is an integer of between 3,000 and 20,000 and preferably between 8,000 and 16,000.

3. A support according to claim 1 or claim 2, in which said at least one element comprising phenoxy polymer is produced in the form of a multifilament yarn, monofilament yarn, split yarn, long and short staple yarn, such as wool and cotton yarn, fibre, powder, spot resin bonded material, film, felt, coating, nonwoven fabric and any desired combination thereof.

4. A support according to claim 3, in which said yarn consists entirely of said phenoxy polymer.

5. A support according to claim 3, in which said yarn is composed of said phenoxy polymer and at least one other different polymer.

6. A support according to any one of the preceding claims, comprising a plurality of elements comprising thermoplastic phenoxy polymer.

7. A support according to any one of the preceding claims, in which said thread-like elements are fibres selected from the group consisting of carbon, glass, basalt, aramid, polyester, ceramic or metallic fibres and mixtures thereof

8. A support according to any one of the preceding claims in the form of nonwoven fabric, orthogonal fabric, unidirectional fabric, multiaxial fabric, three-dimensional fabric, tape fabric, braided fabric, cord fabric, warp and weft knitted fabric and any desired combination thereof.

9. A composite material comprising a fibrous support according to any one of the preceding claims and a thermosetting resin having a glass transition temperature of no less than 30°C.

10. A composite material according to claim 9, in which said thermosetting resin is selected from the group consisting of epoxy, vinyl ester, polyester, phenolic and phenoxy resins and mixtures thereof.

11. A composite material according to claim 10, in which said thermosetting resin is an epoxy resin.

12. A composite material according to any one of claims 9 to 11, in which the percentage by weight of phenoxy polymer is between 0.5 and 99.5 % of the total weight of the material.
